# EUROPEAN PATENT SPECIFICATION

(11) **EP 1 778 777 B1**
(45) Date of publication and mention of the grant of the patent: **10.11.2010**
(21) Application number: 05750017.5
(22) Date of filing: 17.05.2005
(51) Int. Cl.: C08K 5/17, C08K 5/33, C09D 11/12

(54) **ANTISKINNING COMPOUND AND COMPOSITIONS CONTAINING THEM**
HAUTVERHINDERUNGSVERBINDUNG UND DIESE ENTHALTENDE ZUSAMMENSETZUNGEN
AGENT INHIBITEUR DE PEAU ET COMPOSITIONS CONTENANT LEDIT AGENT

(30) Priority: 02.06.2004 US 859304; 10.05.2005 US 125894
(43) Date of publication of application: 02.05.2007
(73) Proprietor: ARKEMA FRANCE, 92700 Colombes (FR)
(72) Inventor: ALFORD, Daniel, Jr., Pottstown, PA 19464 (US); FELLENGER, Paul, D., Denver, PA 17517 (US); LOU, Jianfeng, Wayne, PA 19087 (US); MARTYAK, Nicholas, M., Doylestown, PA 18901 (US); FRANCO, Gerald, P., Narbeth, PA 19072 (US); DOWLING, Conor, M., Lower Gwynedd, PA 19002 (US)
(86) International application number: PCT/US2005/017201
(87) International publication number: WO 2005/121237

(56) References cited:
- DE-A1- 1 519 103
- US-A- 3 259 511
- US-A- 4 482 662
- US-A1- 2003 025 105
- US-A1- 2003 047 112

## Description

This application is a continuation in part of United States application serial number 10/859,304, filed June 2, 2004.

### FIELD OF THE INVENTION

The invention relates to anti-skinning agents containing mixtures of compounds (combinations of additives), coating compositions containing them and articles coated with them. The compounds are selected from the groups of (a) organic and inorganic oxygen scavengers with (b) amines including alkyl amines and/or alkyl alkanolamines. The invention further relates to compositions containing these anti-skinning agents, like coating compositions such as oxidatively drying alkyd resins.

### BACKGROUND OF THE INVENTION

Colorless and pigmented oxidatively drying paints and coatings based on oxidatively drying oils, alkyd resins, epoxy esters and other oxidatively drying refined oils are known. These oils and binders crosslink oxidatively under the influence of oxygen (preferably atmospheric oxygen) by means of the addition of driers, such as metal carboxylates of transition metals. If this crosslinking takes place before the product is actually used, they can form a solid barrier film, a skin, on the surface when stored in open or closed containers. This is highly undesirable and should therefore be avoided since it makers the paint more difficult to work with, and commonly interferes with the uniform distribution of the driers. The accumulation of the driers in the paint skin that forms can lead to considerable delays in the drying of the paint when it is applied.

Skinning of the paint film after application is also disadvantageous. Excessively rapid drying of the surface of the paint prevents the lower film layers from drying evenly because they are shielded from oxygen, which is prevented from sufficiently penetrating into and dispersing within the paint film. This can lead among other things to flow problems in the paint film, adhesion problems, or insufficiently hard films.

It is known to add organic substances to a paint that inhibit the reaction of the drier metal with (atmospheric) oxygen by binding the oxygen or by complexing of the drier metal.

US patent number 4,618,371 describes the use of aliphatic α-hydroxy ketones as anti-skinning agents. DE-A 1 519 103. discloses N,N-dialkylated hydroxylamines for this purpose. Because of their low volatility, however, hydroxylamines alone can lead to severe delays in drying and often also to reduced film hardness values, so that their possible applications are limited. They have not been able to gain commercial acceptance as anti-skinning agents. US patent application publication number 2003/0025105 describes the use of organic hydroxylamines such as diethylhydroxylamine and β-dicarbonyl compounds such as diethylformamide as anti-skinning agents.

A central issue in alkyd resin technology is to quickly cure the resin which occurs via oxidative crosslinking, while maintaining adequate anti-skinning properties. Anitskinning requires slowing the curing reaction at the air-resin interface. Oximes, which act as oxygen scavengers, or suitable phenolic compounds are most often used today as anti-skinning agents in industry. However, the phenolic anti-skinning agents display a significant delay in surface drying such that alone they are only suitable for certain coating compositions. Oximes such as e.g. methyl ethyl ketoxime (MEKO) or butyraldoxime, on the other hand, display only slight delays in surface drying due to their volatility. However, the high volatility of oximes results in rapid loss of this anti-skin agent from the alkyd and thus does not adequately control skinning. The most significant disadvantage of the oximes, which are widely used today, lies in their toxicity. As a consequence of this, users have to observe elaborate personal protection precautions when working with paints containing oximes as anti-skinning agents.

It was discovered that the use of the combination of an antiskinning agent and a co-promoter as described below provides for inhibition of skinning with minimal impact on drying properties. In particular, the above-mentioned disadvantages of the specified hydroxylamines as anti-skinning agents could also be avoided by combining such substances with the additional compounds described below, and hence products that better satisfy requirements as anti-skinning agents are obtained.

Incorporating the combinations according to the present invention into an airdrying alkyd resin provides an alkyd resin system which is resistant to undesirable skinning and exhibits improved drying of the resin films after application.

### DETAILED DESCRIPTION OF THE INVENTION

The present invention relates to an anti-skinning agent containing
a) an organic or inorganic oxygen scavenger,with either or both of
b) an organic alkyl amine compound of formula II 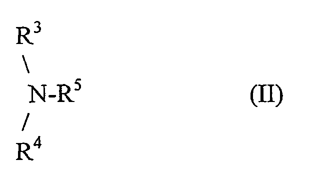 where R³, R⁴ and R⁵ may be mutually independently hydrogen but all three can not be hydrogen, a linear or branched, saturated or unsaturated C₁-C₂₀ aliphatic molecule or radical, which can optionally be mono- or polysubstituted, or a C₆-C₁₂ aryl molecule or radical, a C₇-C₁₄ araliphatic molecule or radical or a C₅-C₇ cycloaliphatic molecule or radical, and
c) an organic alkyl alkanolamine compound of formula (III) 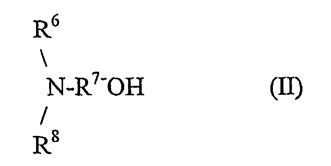 where R⁶ and R⁸ may be mutually independently hydrogen but both can not be hydrogen, a linear or branched, saturated or unsaturated C₁-C₂₀ aliphatic molecule or radical, which can optionally be mono- or polysubstituted, a C₆-C₁₂ aryl radical, a C₇-C₁₄ araliphatic molecule or radical or a C₅-C₇ cycloaliphatic molecule or radical and R⁷ may be a linear or branched, saturated or unsaturated C₁-C₂₀ aliphatic molecule or radical, which can optionally be mono-or polysubstituted, a C₆-C₁₂ aryl molecule or radical, a C₇-C₁₄ araliphatic molecule or radical or a C₅-C₇ cycloaliphatic molecule or radical.

An organic or inorganic oxygen scavenger is a material which exhibits the ability to complex with free oxygen and slow its oxidative reactions. Representative examples of organic oxygen scavengers include but are not limited to: hydroquinone, substituted hydroquinones, semi-hydroquinone, catechol, substituted catechols, erythorbic acid, hydroxylamine compounds, carbohydrazides and methyl ethyl ketoxime. Representative examples of inorganic oxygen scavengers include but are not limited to sulfites.

Hydroxylamine oxygen scavengers in accordance with the present invention are of the general formula: 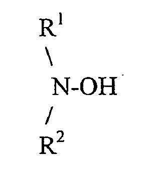 where R¹ and R² mutually independently hydrogen, a linear or branched, saturated or unsaturated C₁-C₂₀ aliphatic molecule or radical, which can optionally be mono- or polysubstituted, or a C₆-C₁₂ aryl molecule or radical, a C₇-C₁₄ araliphatic molecule or radical or a C₅-C₇ cycloaliphatic.

Representative hydroxylamines include but are not limited to: hydroxylamine, methylhydroxylamine, dimethylhydroxylamine, methyl-ethylhydroxylamine, ethylhydroxylamine, diethylhydroxylamine, dibutylhydroxylamine, dibenzylhydroxylamine, mono-isopropylhydroxylamine and mixtures thereof.

Hydroquinone oxygen scavengers in accordance with the present invention may be unsubstituted or substituted. The substituted hydroquinone oxygen scavengers can be substituted in the ortho or meta positions or both with moieties including but not limited to C-1 to C6 alkyl or aryl moieties. Representative examples of substituted hydroquinones include but are not limited to methyl hydroquinone.

Representative organic alkyl amines include but are not limited to: monoethyl amine, diethyl amine, triethyl amine, monoisopropyl amine, diisopropyl amine, monobutyl amine, dibutylamine, tributyl amine, monoamyl amine, dimethyl ethyl amine, dimethyl isopropyl amine, ethyl diisopropyl amine, sec-butyl amine, tetramethylpropylenediamine, diethylaminopropylamine, 3-methoxypropylamine, dimethylaminopropylaminopropylamine and 3-isopropoxypropylamine and mixtures thereof.

Representative organic alkyl alkanolamines include but are not limited to: methylaminoethanol, dimethylaminoethanol, methydiethanolamine, ethylaminoethanol, diethylaminoethanol, dimethylamino-2-propanol, isopropylaminoethanol, disiopropylaminoethanol, butylaminoethanol, dibutylaminoethanol, butyldiethanolamine, tert-butylaminoethanol and mixtures thereof.

The invention also relates to compositions of matter containing these anti-skinning agents.

For the purposes of the invention mixtures of one or more organic or inorganic oxygen scavengers and either or both an organic alkyl amine and/or an organic alkyl alkanolamine compound are used alone or as solutions or dispersions or emulsions in water and/or organic solvents. Suitable organic solvents include all conventional solvents, such as aromatics, white spirits, ketones, alcohols, ethers and fatty acid esters. The present invention provides for a novel means of balancing the need for a rapid dry through of an alkyd resin coating while maintaining an acceptable oxidative control at the air-resin interface to control skinning.

For the use according to the present invention the one or more organic or inorganic oxygen scavengers (A) and either or both an organic alkyl amine (B) and/or an organic alkyl alkanolamine (C) can be used in a broad range of mixtures with one another. They are preferably used in the ratio (A):(B) and/or (C)= from 0.01:75 to 75:0.01, preferably from 0.05:30 to 30:0.05 and most preferably from 0.1:10 to 10:0.1 parts. In a mixture consisting of all three components, each of the components can mutually independently preferably be used in the ratio 0.1 to 10 to each of the other components used. They can be used in pure form or in aqueous solution or aqueous dispersion or emulsion or in the form of solutions in organic solvents. Aqueous in this context is intended to mean that water is either the sole solvent or is added in a quantity of over 50 wt. % relative to the solvent blend together with conventional organic solvents (e.g. alcohols).

The amount of anti-skinning agent combination used in a coating system primarily depends on the content of binder and drier used in the particular coating composition. As a general rule between 0.001 and 2.0 wt. % of mixtures of compounds according to the present invention should be added. Preferred amounts to be used are 0.01 to 0.5 wt. %, relative in each case to the overall composition of the coating composition. The amounts can also depend on the type of binder and the pigments used in the coating composition. Thus, in special systems the relative amount of additive to be used can also be greater than 2.0 wt. % (relative to the overall composition).

It is an advantage of the anti-skinning agent combination of the present invention that it reliably prevents skinning in a wide range of binders and when used with various driers but that it does not unfavorably influence other drying properties of the resin.

The invention is further illustrated but is not intended to be limited by the following examples in which all parts and percentages are by weight unless otherwise specified.

### EXAMPLES

In examples 1 through 6 a common short oil resin, Beckosol 12054 (available from Reichhold Chemicals, Inc.), containing 50% solids was used. In examples 7 through 12, tung oil was used as the curing medium, with cobalt II added as a drying agent. When cobalt II is added to tung oil, it quickly causes curing and the formation of a hard surface film.

### Example 1

This example shows the performance of a hydroxylamine, diethylhydroxylamine (DEHA)-amine formulations containing no additional volatile organic compounds such as diethyl formamide (DEF) in a short oil alkyd resin (Beckosol 12054). MEKO (methyl ethyl ketoxime) was compared to combinations of DEHA and alkyl amines or alklyl alkanolamines. Cobalt octoate was added to the resin so the final cobalt ion concentration was 0.2%. To the resin-cobalt mixture was added MEKO (available as a 25% active solution), DEHA with diethyl formamide (DEF), as a 14% active solution or DEHA with either alkyl amines or alkyl alkanolamines. The samples were prepared on an eqi-molar basis using 750 ppm of DEHA (e.g., 750 mg/l; 0.0084 mol DEHA/1). Ten-gram samples were placed in bottles and a small hole was drilled into the cap so air could enter into the bottles. Air was swept over the top of the bottles using a flow rate of about 100 feet per minute. The onset of skinning was monitored daily with the following results:

**Table 1**

| MEKO (0.055 mmol active) | MEKO (0.114 mmol active) (0.016 | Diethylhydroxylami ne (0.065 mmol) + Diethyl formamide mmol) | Diethylhydroxylami ne (0.068 mmol) + Diisoproplyaminoet hanol (0.018 mmol) | Diethylhydroxylami ne (0.069 mmol) + Ethylaminoethanol (0.018 mmol) | Diethylhydroxy ne (0.066 mmo Dibutyl amir (0.016 mmo |
|---|---|---|---|---|---|
| 13 Days | 20 Days | 62 Days | > 70 Days | > 70 Days | > 70 Days |

The MEKO samples showed poor resistance to skinning even at 0.114 mmol concentration. The sample containing diethylhydroxylamine with the co-solvent diethyl formamide showed better anti-skinning performance than MEKO. The samples containing diethylhydroxylamine with either an alkyl amine or alkyl alkanolamine showed the overall best anti-skinning performance. The surfaces of the last three samples were only tacky and not completely skinned even after 70 days of exposure to air.

Similar skinning results were found with other combination of diethylhydroxylamine and other alkyl amines such as diisopropyl amine (DiPA), tributyl amine (TBA) and triethyl amine (TEA), all samples were tacky and not completely skinned after 70 days. Similarly, combinations of diethylhydroxylamine with other alkyl alkanolamines such as dibutylaminoethanol (DBAE) also delayed skinning to greater than 70 days. In all cases, the total concentration of DEHA with either the alkyl amine or the alkyl alkanolamines was about 0.081 mmol in the ten-gram sample or about 8 mmol/kg of resin.

### Example 2

This example shows the dry-through performance of the short-oil resin used in Example 1 with eqimolar amounts of prior art antiskinning agents, and those of the present invention based on 750 ppm DEHA (0.084 mmol DEHA/10 gram of resin). The cobalt concentration for this dry-through performance study was decreased to 0.1 %. The combinations of resin with the cobalt drier and the antiskinning agents were placed onto a substrate and a drawdown bar was used to apply a three mil thick coating. The samples were placed in an exhaust hood with air flowing over the samples at about 100 feet per minute. The tack-free time was determined by the absence of a fingerprint on the resin.

The dry-through performance was monitored using a methyl ethyl ketone (MEK) double-rub. Cheesecloth was soaked in MEK for about ten seconds then applied to the resin using a downward force of one pound per square in (1 psi). One complete rub was counted as a forward and backward stroke. The number of double-rubs necessary to remove the resin is an indication of the dry-through: the higher the number of MEK double rubs (DR), the faster the dry-through. Table 2 summarizes the results.

**Table 2**

| Drying Time | DEHA Only (0.086 mmol) | DEHA (0.068 mmol) + DBAE (0.017 mmol) | DEHA (0.068 mmol) +EAE (0.017 mmol) DiPAE | DEHA (0.068 mmol) + (0.017 mmol) | MEKO (0.337 mmol) (0.337 mmol x 25% = 0.084 mmol active MEKO) | Borcher 0241 (0.588 mmol) (0.588 mmol x 14% = 0.082 mmol active material) |
|---|---|---|---|---|---|---|
| **1** | **3** | **4** | **5** | **6** | **7** | **8** |
| Tack Free Time < 3mins | Tack Free Time < 3mins | Tack Free Time < 3mins | Tack Free Time < 3mins | Tack Free Time < 3mins | Tack Free Time < 3mins | Tack Free Time < 3mins |
| 3 Hours | MEK DRs <3 | MEK DRs <3 | MEK DRs <3 | MEK DRs <3 | MEK DRs <3 | MEK DRs <3 |
| 27 Hours | MEK DRs 2 | MEK DRs 2 | MEK DRs 2 | MEK DRs 2 | MEK DRs 10 | MEK DRs 2 |
| 124 Hours | MEIC DRs 6 | MEK DRs 6 | MEK DRs 6 | MEKDRs 6 | MEK DRs 10 | MEK DRs 7 |
| 264 Hours | MEK DRs 20 | MEK DRs 30 | MEK DRs 30 | MEK DRs 35 | MEK DRs 30 | MEK DRs 30 |
| 480 Hours | MEK DRs 25 | MEK DRs 25 | MEK DRs 25 | MEK DRs 30 | MEK DRs 30 | MEK DRs 30 |

As shown in Table 2, the resin containing the MEKO anti-skinning agent showed the fastest dry-through rate due to the high volatility of MEKO but yielded the poorest anti-skinning performance as seen in Example 1. The samples containing DEHA with an alkyl alkanolamine showed similar dry-through properties to the sample containing DEHA with DEF.

Example 2 shows that the combination of diethylhydroxylamine with an alkyl alkanolamine showed increased resistance to skinning, without compromising dry-through performance in comparison to the prior art MEKO and DEHA with DEF.

### Example 3

This example shows the dry-through performance of the short-oil resin used in Example 1 with eqimolar amounts of antiskinning agents using alkyl amines, based on 750 ppm DEHA (0.084 mmol DEHA/10 gram of resin). The same procedure used in Example 2 was used in Example 3.

**Table 3**

| Drying Time | MEKO (0.337 mmol) (0.337 mmol x 25% = 0.084 mmol active MEKO) | Diethylhydroxylamine (0.065 mmol) + Diethyl formamide (0.016 mmol) | DEHA (0.068 mmol) + DiPA (0.017 mmol) | DEHA (0.068 mmol) + DBA (0.017 mmol) | DEHA (0.068 mmol) + TBA (0.017 mmol) | DEHA (0.069 mmol) + TEA (0.017 mmol) |
|---|---|---|---|---|---|---|
| Tack Free Time < 3mins | Tack Free Time < 3mins | Tack Free Time < 3mins | Tack Free Time < 3mins | Tack Free Time < 3mins | Tack Free Time < 3mins | Tack Free Time < 3mins |
| 3 Hours | MEK DRs < 3 | MEK DRs < 3 | MEK DRs < 3 | MEK DRs < 3 | MEK DRs < 3 | MEK DRs < 3 |
| 27 Hours | MEK DRs 10 | MEK DRs 2 | MEK DRs 2 | MEK DRs 2 | MEK DRs 2 | MEK DRs 2 |
| 124 Hours | MEK DRs 10 | MEK DRs 7 | MEK DRs 8 | MEK DRs 10 | MEK DRs 11 | MEK DRs 10 |
| 264 Hours | MEK DRs 30 | MEK DRs 30 | MEK DRs 25 | MEK DRs 30 | MEK DRs 25 | MEK DRs 30 |
| 480 Hours | MEK DRs 30 | MEK DRs 30 | MEK DRs 25 | MEK DRs 30 | MEK DRs 30 | MEK DRs 30 |

The resin containing the MEKO anti-skinning agent showed the fastest dry-through rate due to the high volatility of MEKO but yielded the poorest anti-skinning performance as seen in Example 1. The samples containing DEHA with an alkyl amine showed better dry-through performance after 124 hours than the sample containing DEHA with DEF. The samples containing DEHA with an alkyl amine showed similar results after 264 and 480 hours to the Borcher 0241 (DEHA with DEF available from Borcher GmbH Ltd.) but enhanced anti-skinning performance as seen in Example 1.

Example 3 shows that the combination of diethylhydroxylamine with an alkyl amine showed increased resistance to skinning, without compromising dry-through performance in comparison to the prior art MEKO and DEHA with DEF.

### Example 4

This example shows the performance of DEHA-alkyl alkanolamine formulations containing no additional volatile organic compounds such as DEF in a medium oil resin. A common medium oil resin, Beckosol 11081 (available form Reichhold Chemicals, Inc.) containing 50% solids was used to compare MEKO to combinations of DEHA and alkyl alkanolamines. Cobalt octoate was added to the resin so the final cobalt ion concentration was 0.2%. To the resin-cobalt mixture was added MEKO, or DEHA with an alkyl alkanolamine. Ten-gram samples were prepared on an eqimolar basis using 750 ppm (e.g., 750 mg/l; 0.0084 mol DEHA/1) of diethylhydroxylamine hydroxide (DEHA).

**Table 4**

| MEKO (0.055 mmol active) | MEKO (0.114 mmol active) | Diethylhydroxylamine (0.065 mmol) + Diethyl formamide (0.016 mmol) | Diethylhydroxylamine (0.068 mmol) + Diisoproplyaminoethanol (0.018 mmol) | Diethylhydroxylamine (0.069 mmol) + Ethylaminoethanol (0.018 mmol) |
|---|---|---|---|---|
| 2 Days | 7 Days | 32 Days | 37 Days | 37 Days |

The MEKO samples showed poor resistance to skinning even at 0.114 mmol. The sample containing diethylhydroxylamine with diethyl formamide showed better skinning performance than the MEKO samples. The samples containing diethylhydroxylamine with alkyl alkanaolamines, DiPAE or EAE showed the best overall skinning performance. The skinning performance of the samples containing DEHA with an alkyl alkanolamine performed better than that containing DEHA with DEF yet no additional co-solvents were necessary in the DEHA-alkyl alkanolamine samples.

### Example 5

This example shows the dry-through performance of the medium oil resin used in Example 4 with eqimolar amounts of antiskinning agents, based on 750 ppm DEHA (∼0.085 mmol DEHA/10 gram of resin). The cobalt concentration for the dry-through performance study was decreased to 0.1 %. The resin with the cobalt drier and the antiskinning agents were placed onto substrate and a drawdown bar was used to apply a three mil thick coating. The samples were placed in an exhaust hood with air flowing over the samples at about 100 feet per minute. The tack-free time was determined by the absence of a fingerprint on the resin.

**Table 5**

| Drying Time | MEKO (0.4487 mmol) (0.4487 mmol x 25% = 0.112 mmol active MEKO) | Diethylhydroxylamine (0.085 mmol) + Diethyl formamide (0.026 mmol) | DEHA (0.090 mmol) | DEHA (0.068 mmol) + DiPAE (0.017 mmol) | DEHA (0.068 mmol) + TBA (0.017 mmol) |
|---|---|---|---|---|---|
| Tack-Free | Tack Free Time >2Hours | Tack Free Time >2Hours Tack Free Time >2Hours | Tack Free Time >2Hours | Tack Free Time >2Hours | Tack Free Time >2Hours |
| 3.5 Hours | MEK DRs 11 | MEK DRs 8 | MEK DRs 7 | MEK DRs 8 | MEK DRs 7 |
| 30 Hours | MEK DRs 14 | MEK DRs 11 | MEK DRs | MEK DRs 8 9 | MEK DRs 9 |
| 146 Hours | MEK DRs 14 | MEK DRs 12 | MEK DRs 12 | MEK DRs 12 | MEK DRs 12 |

The resin containing the MEKO anti-skinning agent showed the fastest dry-through rate due to the high volatility of MEKO but yielded the poorest anti-skinning performance as seen in Example 1. After about 30 hours, the samples containing DEHA with either an alkyl amine (TBA) or an alkyl alkanolamine (DiPAE) showed similar dry-through performance to the DEHA sample containing the DEF but no additional VOC are present as with the use of DEF.

### Example 6

This example shows the dry-through performance of the medium oil resin used in Example 4 with eqimolar amounts of antiskinning agents based on 750 ppm DEHA (∼0.085 mmol DEHA/10 gram of resin). However, the DEHA concentration was lowered to 0.0515 mmol and the amine concentration was increased to 0.0340 mmol. The cobalt concentration for the dry-through performance study was 0.1%. The resin with the cobalt drier and the antiskinning agents were placed onto a substrate and a drawdown bar was used to apply a three mil thick coating. The samples were placed in an exhaust hood with air flowing over the samples at about 100 feet per minute. The tack-free time was determined by the absence of a fingerprint on the resin.

**Table 6**

| Drying Time | MEKO (0.4487 mmol) (0.4487 mmol x 25% = 0.112 mmol active MEKO) | Diethylhydroxylamine (0.085 mmol) + Diethyl formamide (0.026 mmol) | DEHA (0.090 mmol) | DEHA (0.0515 mmol) + DiPAE (0.0342 mmol) | DEHA (0.0515 mmol) + TBA (0.0342 mmol) |
|---|---|---|---|---|---|
| Tack-Fre | Tack Free Time >2Hours | Tack Free Time >2Hours | Tack Free Time >2Hours | Tack Free Time >2Hours | Tack Free Time >2Hours |
| 3.5 Hours | MEK DRs 11 | MEK DRs 8 | MEK DRs 7 | MEK DRs 8 | MEK DRs 10 |
| 30 Hours | MEK DRs 14 | MEK DRs 11 | MEK DRs 8 | MEK DRs 10 | MEK DRs 11 |
| 146 Hours | MEKDRs 14 | MEK DRs 12 | MEK DRs 12 | MEK DRs 14 | MEK DRs 13 |

The resin containing the MEKO anti-skinning agent showed the fastest dry-through rate due to the high volatility of MEKO but yielded the poorest anti-skinning performance as seen in Example 1. After about 30 hours, the samples containing DEHA with either an alkyl amine (TBA) or an alkyl alkanolamine (DiPAE) showed similar dry-through performance to the DEHA sample containing the DEF but no additional VOC are present as with the use of DEF.

### Examples 7

Additional testing of the antiskinning properties of antiskinning agents alone and with co-promoters was undertaken. The test solutions, A through L as described below were prepared. Tung oil was used as the curing medium. When cobaltous, Co(II), is added to tung oil it quickly causes curing, loss of cis unsaturation in the oil producing a hard film. Addition of an anti-skin agent can slow the curing of tung oil.

Tung oil in combination with cobalt (Co) dryer was used as a resin matrix in this example. The resin matrix was formed from a 150 gram sample of tung oil to which was added 0.1% by weight of Co(II) (Co 12 available from OMG America, Westlake, OH). The cobalt was adequately mixed into the tung oil.

Concentrated anti-skin agent and anti-skin agent/co-promoter solutions were prepared as follows:
Solution A: Methyl ethyl ketoxime: 25% active solution in mineral spirits: added 1.40 grams of this 25% active solution into 8.60 grams of mineral spirits.
Solution B: Hydroquinone (HQ): dissolved 1.402 grams HQ into 8.60 grams into mineral spirits.
Solution C: Methylhydroquinone (MeHQ): dissolved 1.401 grams MeHQ into 8.60 grams of mineral spirits.
Solution D: Methyl ethyl ketoxime (MEKO)/Diisopropylaminoethanol (DiPAE) - MEKO, as a 25% active solution in mineral spirits: added 1.093 grams of this 25% active MEKO solution along with 0.307 grams DiPAE into 8.60 grams of mineral spirits.
Solution E: Hydroquinone (HQ)/ Diisopropylaminoethanol (DiPAE): dissolved 0.7484 grams HQ and 0.6516 grams of DiPAE into 8.60 grams into mineral spirits.
Solution F: Methylliydroquinone (MeHQ)/ Diisopropylaminoethanol (DiPAE):
   dissolved 0.7900 grams MeHQ and 0.610 grams DiPAE into 8.60 grams of mineral spirits.
Solution G: Methyl ethyl ketoxime: 25% active solution in mineral spirits: added 1.403 grams of this 25% active solution into 8.60 grams of water.
Solution H: Hydroquinone (HQ): dissolved 1.406 grams HQ into 8.60 grams into water.
Solution I: Methylhydroquinone (MeHQ): dissolved 1.402 grams MeHQ grams into 8.60 grams of water.
Solution J: Methyl ethyl ketoxime (MEKO)/ Diisopropylaminoethanol (DiPAE):
   25% active solution MEKO in mineral spirits: added 1.093 grams of this
   25% active solution along with 0.307 grams DiPAE into 8.60 grams of water.
Solution K: Hydroquinone (HQ)/ Diisopropylaminoethanol (DiPAE): dissolved 0.7484 grams HQ and 0.6516 grams of DiPAE into 8.60 grams into water.
Solution L: Methylhydroquinone (MeHQ)/ Diisopropylaminoethanol (DiPAE):
   dissolved 0.7900 grams MeHQ and 0.610 grams DiPAE into 8.60 grams of water.

The above solutions were formulated into the following samples and the onset of skin formation evaluated.

Sample 1: No Antiskin Agent: A 10 gram sample was tung oil/Co drier placed in a glass bottle. The bottle was placed in an exhaust hood with air flowing over the top of the glass bottle at the rate of approximately 100 ft³/minute.

Sample 2: To a 10 gram sample of tung oil/Co drier was added 0.2096 grams of Solution A above (MEKO in mineral spirits). The solution was mixed in a glass bottle and placed in an exhaust hood with air flowing over the top of the glass bottle at the rate of approximately 100 ft³/minute.

Sample 3: To a 10 gram sample of tung oil/Co drier was added 0.0675 grams of Solution B above (HQ in mineral spirits). The solution was mixed in a glass bottle and placed in an exhaust hood with air flowing over the top of the glass bottle at the rate of approximately 100 ft³/minute.

Sample 4: To a 10 gram sample of tung oil/Co drier was added 0.0759 grams of Solution C above (MeHQ in mineral spirits). The solution was mixed in a glass bottle and placed in an exhaust hood with air flowing over the top of the glass bottle at the rate of approximately 100 ft³/minute.

Sample 5: To a 10 gram sample of tung oil/Co drier was added 0.1610 grams of Solution D above (MEKO/DiPAE in mineral spirits). The solution was mixed in a glass bottle and placed in an exhaust hood with air flowing over the top of the glass bottle at the rate of approximately 100 ft³/minute.

Sample 6: To a 10 gram sample of tung oil/Co drier was added 0.0759 grams of Solution E above (HQ/DiPAE in mineral spirits). The solution was mixed in a glass bottle and placed in an exhaust hood with air flowing over the top of the glass bottle at the rate of approximately 100 ft³/minute.

Sample 7: To a 10 gram sample of tung oil/Co drier was added 0.0812 grams of Solution F above (MeHQ/DiPAE in mineral spirits). The solution was mixed in a glass bottle and placed in an exhaust hood with air flowing over the top of the glass bottle at the rate of approximately 100 ft³/minute.

Sample 8: To a 10 gram sample of tung oil/Co drier was added 0.2091 grams of Solution G above (MEKO in water). The solution was mixed in a glass bottle and placed in an exhaust hood with air flowing over the top of the glass bottle at the rate of approximately 100 ft³/minute.

Sample 9: To a 10 gram sample oftung oil/Co drier was added 0.0671 grams of Solution H above (HQ in water). The solution was mixed in a glass bottle and placed in an exhaust hood with air flowing over the top of the glass bottle at the rate of approximately 100 ft³/minute.

Sample 10: To a 10 gram sample of tung oil/Co drier was added 0.0762 grams of Solution I above (MeHQ in water). The solution was mixed in a glass bottle and placed in an exhaust hood with air flowing over the top of the glass bottle at the rate of approximately 100 ft³/minute.

Sample 11: To a 10 gram sample oftung oil/Co drier was added 0.1599 grams of Solution J above (MEKO/DiPAE in water). The solution was mixed in a glass bottle and placed in an exhaust hood with air flowing over the top of the glass bottle at the rate of approximately 100 ft³/minute.

Sample 12: To a 10 gram sample of tung oil/Co drier was added 0.0760 grams of Solution K above (HQ/DiPAE in water). The solution was mixed in a glass bottle and placed in an exhaust hood with air flowing over the top of the glass bottle at the rate of approximately 100 ft³/minute.

Sample 13: To another 10 gram sample of tung oil/Co drier was added 0.0819 grams of Solution L above (MeHQ/DiPAE in water). The solution was mixed in a glass bottle and placed in an exhaust hood with air flowing over the top of the glass bottle at the rate of approximately 100 ft³/minute.

The results of the testing of samples A through L are summarized in Table 7.

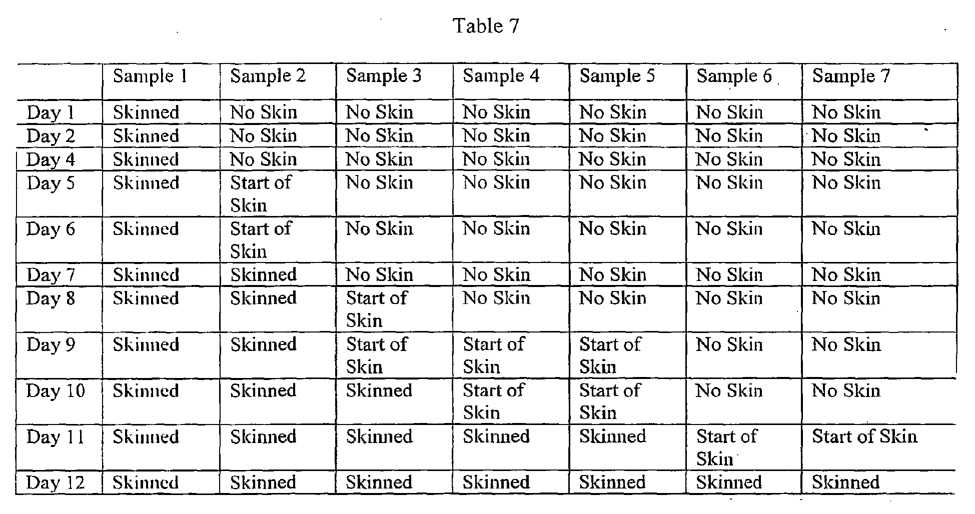

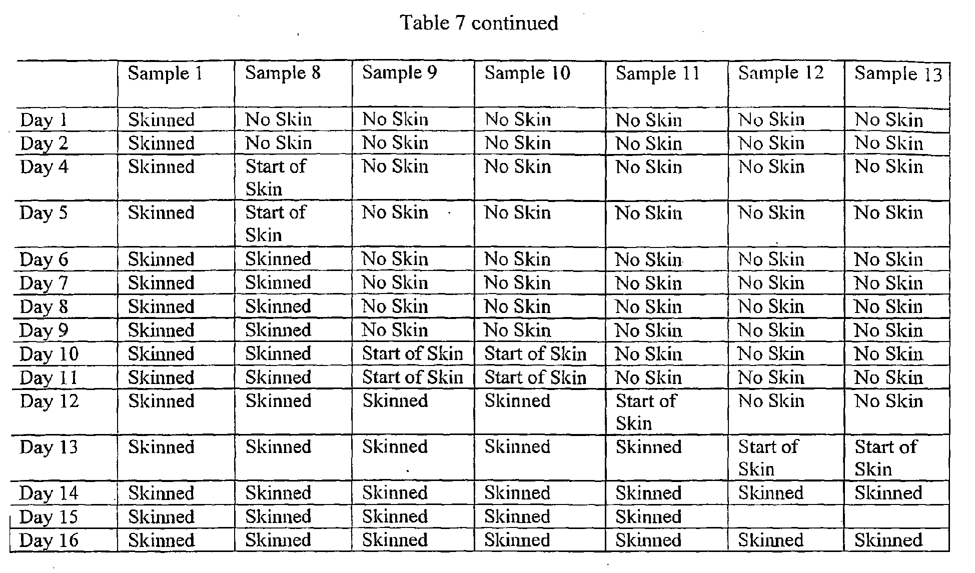

The data in Table 7 shows the efficacy of the combination of the present invention at controlling skin formation without adversely impacting dry through time. The data shows an oxygen scavenger and alkyl amine and/or alkyl alkanolamine can be dissolved in mineral spirits or water then added to the alkyd during manufacture of the resin to provide a resin with acceptable dry through ad controlled skin formation.

## Claims

1. A coating material, paint or finish which contains an oxidatively drying film former and, as an antiskinning agent, a combination comprising
a) an organic oxygen scavenger of the general formula 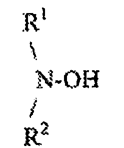 where R¹ and R² mutually independently represent hydrogen, a linear or branched, saturated or unsaturated C₁-C₂₀ aliphatic molecule or radical, which can optionally be mono- or polysubstituted, or a C₆-C₁₂ aryl molecule or radical, a C₇-C₁₄ araliphatic radical or a C₅-C₇ cycloaliphatic,
b) an alkyl amine of formula (II) 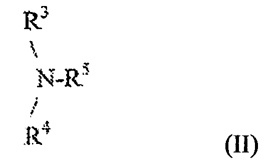 where R³, R⁴ and R⁵ may be mutually independently hydrogen but all three can not be hydrogen, a linear or branched, saturated or unsaturated C₁-C₂₀ aliphatic molecule or radical, which can optionally be mono- or polysubstituted, or a C₆-C₁₂ aryl molecule or radical, a C₇-C₁₄ araliphatic molecule or radical or a C₅-C₇ cycloaliphatic molecule or radical, and/or
c) an alkyl alkanol amine of formula (III) 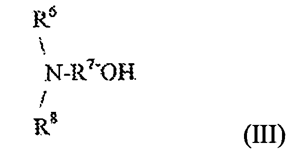 where R⁶ and R⁸ may be mutually independently hydrogen but both can not be hydrogen, a linear or branched, saturated or unsaturated C₁-C₂₀ aliphatic molecule or radical, which can optionally be mono- or polysubstituted, a C₆-C₁₂ aryl molecule or radical, a C₇-C₁₄ araliphatic molecule or radical or a C₅-C₇ cycloaliphatic molecule or radical and R⁷ may be a linear or branched, saturated or unsaturated C₁-C₂₀ aliphatic molecule or radical, which can optionally be mono- or polysubstituted, a C₆-C₁₂ aryl molecule or radical, a C₇-C₁₄ araliphatic molecule or radical or a C₅-C₇ cycloaliphatic molecule or radical.

2. The coating material, paint or finish of claim 1, wherein the organic oxygen scavenger is selected from hydroxylamine, mono-methylhydroxylamine, dimethylhydroxylamine, methyl ethylhydroxylamine, monoethylhydroxylamine, diethylhydroxylamine, dibutylhydroxyl amine, dibenzylhydroxylamine, mono-isopropylhydroxylamine and mixtures thereof.

3. The coating material, paint or finish of claim 1 wherein the alkyl amine is selected from:
monoethyl amine, diethyl amine, triethyl amine, monoisopropyl amine, diisopropyl amine, monobutyl amine, dibutylamine, tributyl amine, monoamyl amine, dimethyl ethyl amine, dimethyl isopropyl amine, ethyl diisopropyl amine, sec-butyl amine, tetramethylpropylenediamine, diethylaminopropylamine, 3- methoxypropylamine, dimethylaminopropylaminopropylamine and 3- isopropoxypropylamine and mixtures thereof.

4. The coating material, paint or finish of claim 1 wherein the alkyl alkanolamine is selected from: methylaminoethanol, dimethylaminoethanol, methydiethanolamine, ethylaminoethanol, diethylaminoethanol, dimethylamino-2-propanol, isopropylaminoethanol, disiopropylaminoethanol, butylaminoethanol, dibutylaminoethanol, butyldiethanolamine, tert-butylaminoethanol and mixtures thereof.

5. The coating material, paint or finish of claim 1, which contains the said combination in an amount of from 0.001 to 2% by weight, based on the total surface coating.

6. The coating material, paint or finish of claim 1, which contains an alkyd resin as the oxidatively drying film former.

7. A process for the production of a coating material, paint or finish containing an oxidatively drying film former comprising incorporating into the coating material, paint or finish, an anti skinning combination comprising a) an organic oxygen scavenger, with b) an alkyl amine of formula (II), and/or c) an alkyl alkanolamine of formula (III), where a), b) and c) are as defined in claim 1.

8. The process of claim 7 wherein said organic oxygen scavenger is selected from hydroxylamine, mono-methylhydroxylamine, dimethylhydroxylamine, methyl ethylhydroxylamine, monoethylhydroxylamine, diethylhydroxylamine, dibutylhydroxyl amine, dibenzylhydroxylamine, mono-isopropylhydroxylamine and mixtures thereof.

9. The process of claim 7 wherein the alkyl amine is selected from: monoethyl alnine, diethyl alnine, triethyl amine, monoisopropyl amine, diisopropyl amine, monobutyl amine, dibutyl amine, tributyl amine, monoamyl amine, dimethyl ethyl amine, dimethyl isopropyl amine, ethyl diisopropyl amine, sec-butyl alnine, tetramethylpropylenediamine, diethylaminopropyl amine, 3-methoxypropylamine, dimethylaminopropylaminopropylamine and 3-isopropoxy propylamine and mixtures thereof.

10. The process of claim 7 wherein the alkyl alkanolamine is selected from: methylamino ethanol, dimethylaminoethanol, methydiethanolamine, ethylaminoethanol, diethylamino ethanol, dimethylamino-2-propanol, isopropylaminoethanol, disiopropylaminoethanol, butylaminoethano 1, dibutylaminoethanol, butyldiethanolamine, tert-butylaminoethanol and mixtures thereof.

11. The process of claim 7, wherein said coating material, paint or finish containing an oxidatively drying film former contains said combination in all amount of from 0.001 to 2% by weight, based on the total surface coating.

12. The process of claim 7, wherein said coating material, paint or finish containing an oxidatively drying film former contains an alkyd resin as the oxidatively drying film former.

13. An article coated with a coating material, paint or finish containing an oxidatively drying film former, wherein all anti skinning combination comprising a) an organic oxygen scavenger, with b) an alkyl amine of formula (II), and/or c) an alkyl alkanolamine of formula (III), where a), b) and c) are as defined in claim 1, is incorporated into the coating material, paint or finish.

14. The article of claim 13 wherein said hydroxylamine is selected from hydroxylamine, mono-methylhydroxylamine, dimethylhydroxylamine, methyl ethylhydroxylamine, monoethylhydroxylamine, diethylhydroxylamine, dibutylhydroxylamine, dibenzylhydroxylamine, mono-isopropylhydroxylamine and mixtures thereof.

15. The article of claim 13 wherein the alkyl amine is selected from: monoethyl amine, diethyl amine, triethyl amine, monoisopropyl amine, diisopropyl amine, monobutyl amine, dibutylamine, tributyl amine, monoamyl amine, dimethyl ethyl amine, dimethyl isopropyl amine, ethyl diisopropyl amine, sec-butyl amine, tetramethylpropylenediamine, diethylamino propylamine, 3-methoxypropylamine, dimethylaminopropylaminopropylamine and 3-isopropoxypropylamine and mixtures thereof.

16. The article of claim 13 wherein the alkyl alkanolamine is selected from: methylamino ethanol, dimethylaminoethanol, methydiethanolamine, ethylaminoethanol, diethylamino ethanol, dimethylamino-2-propanol, isopropylaminoethanol, disiopropylaminoethanol, butylaminoethanol, dibutylaminoethanol, butyldiethanolamine, tert-butylaminoethanol and mixtures thereof.

17. The article of claim 13, wherein said coating material, paint or finish containing an oxidatively drying film former contains said combination in an amount of from 0.001 to 2% by weight, based on the total surface coating.

18. The article of claim 13, wherein said coating material, paint or finish containing an oxidatively drying film former contains an alkyd resin as the oxidatively drying film former.

## Patentansprüche

1. Beschichtungsmasse, Anstrichmittel oder Deckbeschichtung, die bzw. das einen oxidativ trocknenden Filmbildner und als Hautverhinderungsmittel eine Kombination, umfassend
a) einen organischen Sauerstoffänger der allgemeinen Formel 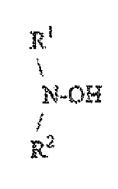 wobei R¹ und R² jeweils unabhängig voneinander für Wasserstoff, ein lineares oder verzweigtes, gesättigtes oder ungesättigtes aliphatisches C₁-C₂₀-Molekül oder einen linearen oder verzweigten, gesättigten oder ungesättigten aliphatischen C₁-C₂₀-Rest, das bzw. der gegebenenfalls ein- oder mehrfach substituiert sein kann, oder ein C₆-C₁₂-Arylmolekül oder einen C₆-C₁₂-Arylrest, einen araliphatischen C₇-C₁₄-Rest oder einen cycloaliphatischen C₅-C₇-Rest stehen,
b) ein Alkylamin der Formel (II) 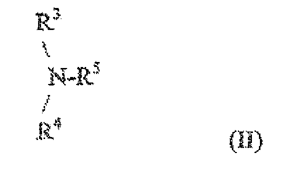 wobei R³, R⁴ und R⁵ jeweils unabhängig voneinander für Wasserstoff stehen können, aber nicht alle drei für Wasserstoff stehen können, oder ein lineares oder verzweigtes, gesättigtes oder ungesättigtes aliphatisches C₁-C₂₀-Molekül oder einen linearen oder verzweigten, gesättigten oder ungesättigten aliphatischen C₁-C₂₀-Rest, das bzw. der gegebenenfalls ein- oder mehrfach substituiert sein kann, oder ein C₆-C₁₂-Arylmolekül oder einen C₆-C₁₂-Arylrest, ein araliphatisches C₇-C₁₄-Molekül oder einen araliphatischen C₇-C₁₄-Rest oder ein cycloaliphatisches C₅-C₇-Molekül oder einen cycloaliphatischen C₅-C₇-Rest stehen können, und/oder
c) ein Alkylalkanolamin der Formel (III) 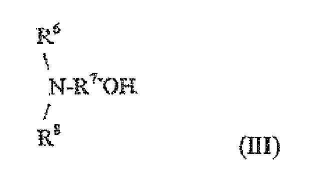 wobei R⁶ und R⁸ jeweils unabhängig voneinander für Wasserstoff stehen können, aber nicht beide für Wasserstoff stehen können, oder ein lineares oder verzweigtes, gesättigtes oder ungesättigtes aliphatisches C₁-C₂₀-Molekül oder einen linearen oder verzweigten, gesättigten oder ungesättigten aliphatischen C₁-C₂₀-Rest, das bzw. der gegebenenfalls ein- oder mehrfach substituiert sein kann, oder ein C₆-C₁₂-Arylmolekül oder einen C₆-C₁₂-Arylrest, ein araliphatisches C₇-C₁₄-Molekül oder einen araliphatischen C₇-C₁₄-Rest oder ein cycloaliphatisches C₅-C₇-Molekül oder einen cycloaliphatischen C₅-C₇-Rest stehen können und R⁷ für ein lineares oder verzweigtes, gesättigtes oder ungesättigtes aliphatisches C₁-C₂₀-Molekül oder einen linearen oder verzweigten, gesättigten oder ungesättigten aliphatischen C₁-C₂₀-Rest, das bzw. der gegebenenfalls ein- oder mehrfach substituiert sein kann, oder ein C₆-C₁₂-Arylmolekül oder einen C₆-C₁₂-Arylrest, ein araliphatisches C₇-C₁₄-Molekül oder einen araliphatischen C₇-C₁₄-Rest oder ein cycloaliphatisches C₅-C₇-Molekül oder einen cycloaliphatischen C₅-C₇-Rest stehen kann,
enthält.

2. Beschichtungsmasse, Anstrichmittel oder Deckbeschichtung nach Anspruch 1, wobei der organische Sauerstoffänger unter Hydroxylamin, Monomethylhydroxylamin, Dimethylhydroxylamin, Methylethylhydroxylamin, Monoethylhydroxylamin, Diethylhydroxylamin, Dibutylhydroxylamin, Dibenzylhydroxylamin, Monoisopropylhydroxylamin und Mischungen davon ausgewählt ist.

3. Beschichtungsmasse, Anstrichmittel oder Deckbeschichtung nach Anspruch 1, wobei das Alkylamin unter Monoethylamin, Diethylamin, Triethylamin, Monoisopropylamin, Diisopropylamin, Monobutylamin, Dibutylamin, Tributylamin, Monoamylamin, Dimethylethylamin, Dimethylisopropylamin, Ethyldiisopropylamin, sec.-Butylamin, Tetramethylpropylendiamin, Diethylaminopropylamin, 3-Methoxypropylamin, Dimethylaminopropylaminopropylamin und 3-Isopropoxypropylamin und Mischungen davon ausgewählt ist.

4. Beschichtungsmasse, Anstrichmittel oder Deckbeschichtung nach Anspruch 1, wobei das Alkylalkanolamin unter Methylaminoethanol, Dimethylaminoethanol, Methyldiethanolamin, Ethylaminoethanol, Diethylaminoethanol, Dimethylamino-2-propanol, Isopropylaminoethanol, Diisopropylaminoethanol, Butylaminoethanol, Dibutylaminoethanol, Butyldiethanolamin, tert.-Butylaminoethanol und Mischungen davon ausgewählt ist.

5. Beschichtungsmasse, Anstrichmittel oder Deckbeschichtung nach Anspruch 1, das bzw. die die Kombination in einer Menge von 0,001 bis 2 Gew.-%, bezogen auf die gesamte Oberflächenbeschichtung, enthält.

6. Beschichtungsmasse, Anstrichmittel oder Deckbeschichtung nach Anspruch 1, das bzw. die als oxidativ trocknenden Filmbildner ein Alkydharz enthält.

7. Verfahren zur Herstellung einer Beschichtungsmasse, eines Anstrichmittels oder einer Deckbeschichtung, die bzw. das einen oxidativ trocknenden Filmbildner enthält, bei dem man in die Beschichtungsmasse, das Anstrichmittel bzw. die Deckbeschichtung eine Hautverhinderungskombination, umfassend a) einen organischen Sauerstoffänger mit b) einem Alkylamin der Formel (II) und/oder c) einem Alkylalkanolamin der Formel (III), einarbeitet, wobei a), b) und c) wie in Anspruch 1 definiert sind.

8. Verfahren nach Anspruch 7, bei dem man den organischen Sauerstoffänger unter Hydroxylamin, Monomethylhydroxylamin, Dimethylhydroxylamin, Methylethylhydroxylamin, Monoethylhydroxylamin, Diethylhydroxylamin, Dibutylhydroxylamin, Dibenzylhydroxylamin, Monoisopropylhydroxylamin und Mischungen davon auswählt.

9. Verfahren nach Anspruch 7, bei dem man das Alkylamin unter Monoethylamin, Diethylamin, Triethylamin, Monoisopropylamin, Diisopropylamin, Monobutylamin, Dibutylamin, Tributylamin, Monoamylamin, Dimethylethylamin, Dimethylisopropylamin, Ethyldiisopropylamin, sec.-Butylamin, Tetramethylpropylendiamin, Diethylaminopropylamin, 3-Methoxypropylamin, Dimethylaminopropylaminopropylamin und 3-Isopropoxypropylamin und Mischungen davon auswählt.

10. Verfahren nach Anspruch 7, bei dem man das Alkylalkanolamin unter Methylaminoethanol, Dimethylaminoethanol, Methyldiethanolamin, Ethylaminoethanol, Diethylaminoethanol, Dimethylamino-2-propanol, Isopropylaminoethanol, Diisopropylaminoethanol, Butylaminoethanol, Dibutylaminoethanol, Butyldiethanolamin, tert.-Butylaminoethanol und Mischungen davon auswählt.

11. Verfahren nach Anspruch 7, bei dem die Beschichtungsmasse, das Anstrichmittel oder die Deckbeschichtung, die bzw. das einen oxidativ trocknenden Filmbildner enthält, die Kombination in einer Menge von 0,001 bis 2 Gew.-%, bezogen auf die gesamte Oberflächenbeschichtung, enthält.

12. Verfahren nach Anspruch 7, bei dem die Beschichtungsmasse, das Anstrichmittel oder die Deckbeschichtung als oxidativ trocknenden Filmbildner ein Alkydharz enthält.

13. Mit einer Beschichtungsmasse, einem Anstrichmittel oder einer Deckbeschichtung, die bzw. das einen oxidativ trocknenden Filmbildner enthält, beschichteter Gegenstand, wobei in die Beschichtungsmasse, das Anstrichmittel bzw. die Deckbeschichtung eine Hautverhinderungskombination, umfassend a) einen organischen Sauerstoffänger mit b) einem Alkylamin der Formel (II) und/oder c) einem Alkylalkanolamin der Formel (III), wobei a), b) und c) wie in Anspruch 1 definiert sind, eingearbeitet ist.

14. Gegenstand nach Anspruch 13, wobei das Hydroxylamin unter Hydroxylamin, Monomethylhydroxylamin, Dimethylhydroxylamin, Methylethylhydroxylamin, Monoethylhydroxylamin, Diethylhydroxylamin, Dibutylhydroxylamin, Dibenzylhydroxylamin, Monoisopropylhydroxylamin und Mischungen davon ausgewählt ist.

15. Gegenstand nach Anspruch 13, wobei das Alkylamin unter Monoethylamin, Diethylamin, Triethylamin, Monoisopropylamin, Diisopropylamin, Monobutylamin, Dibutylamin, Tributylamin, Monoamylamin, Dimethylethylamin, Dimethylisopropylamin, Ethyldiisopropylamin, sec.-Butylamin, Tetramethylpropylendiamin, Diethylaminopropylamin, 3-Methoxypropylamin, Dimethylaminopropylaminopropylamin und 3-Isopropoxypropylamin und Mischungen davon ausgewählt ist.

16. Gegenstand nach Anspruch 13, wobei das Alkylalkanolamin unter Methylaminoethanol, Dimethylaminoethanol, Methyldiethanolamin, Ethylaminoethanol, Diethylaminoethanol, Dimethylamino-2-propanol, Isopropylaminoethanol, Diisopropylaminoethanol, Butylaminoethanol, Dibutylaminoethanol, Butyldiethanolamin, tert.-Butylaminoethanol und Mischungen davon ausgewählt ist.

17. Gegenstand nach Anspruch 13, wobei die Beschichtungsmasse, das Anstrichmittel oder die Deckbeschichtung, das bzw. die einen oxidativ trocknenden Filmbildner enthält, die Kombination in einer Menge von 0,001 bis 2 Gew.-%, bezogen auf die gesamte Oberflächenbeschichtung, enthält.

18. Gegenstand nach Anspruch 13, wobei die Beschichtungsmasse, das Anstrichmittel oder die Deckbeschichtung als oxidativ trocknenden Filmbildner ein Alkydharz enthält.

## Revendications

1. Matériau de revêtement, peinture ou finition qui contient un agent filmogène à séchage par oxydation et, comme agent anti-peau, une combinaison comprenant
a) un agent organique fixant l'oxygène de formule générale 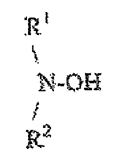 dans laquelle R¹ et R² représentent, indépendamment l'un de l'autre, un atome d'hydrogène, une molécule ou un radical aliphatique en C₁-C₂₀, linéaire ou ramifié, saturé ou insaturé, qui peut éventuellement porter un ou plusieurs substituants, ou une molécule ou un radical aryle en C₆-C₁₂, un radical araliphatique en C₇-C₁₄ ou un radical cycloaliphatique en C₅-C₇,
b) une alkylamine de formula (II) 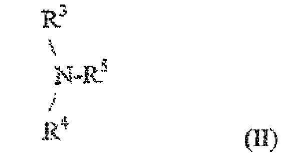 dans laquelle R³, R⁴ et R⁵ peuvent représenter, indépendamment les uns des autres, un atome d'hydrogène, mais les trois ne peuvent pas représenter en même temps un atome d'hydrogène, une molécule ou un radical aliphatique en C₁-C₂₀, linéaire ou ramifié, saturé ou insaturé, qui peut éventuellement porter un ou plusieurs substituants, ou une molécule ou un radical aryle en C₆-C₁₂, une molécule ou un radical araliphatique en C₇-C₁₄ ou une molécule ou un radical cycloaliphatique en C₅-C₇, et/ou
c) une alkylalcanolamine de formula (III) 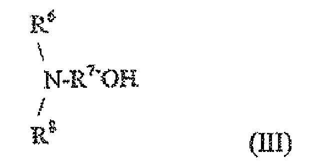 dans laquelle R⁶ et R⁸ peuvent représenter, indépendamment l'un de l'autre, un atome d'hydrogène, mais les deux ne peuvent pas représenter en même temps un atome d'hydrogène, une molécule ou un radical aliphatique en C₁-C₂₀, linéaire ou ramifié, saturé ou insaturé, qui peut éventuellement porter un ou plusieurs substituants, une molécule ou un radical aryle en C₆-C₁₂, une molécule ou un radical araliphatique en C₇-C₁₄ ou une molécule ou un radical cycloaliphatique en C₅-C₇, et R⁷ peut être une molécule ou un radical aliphatique en C₁-C₂₀, linéaire ou ramifié, saturé ou insaturé, qui peut éventuellement porter un ou plusieurs substituants, une molécule ou un radical aryle en C₆-C₁₂, une molécule ou un radical araliphatique en C₇-C₁₄ ou une molécule ou un radical cycloaliphatique en C₅-C₇.

2. Matériau de revêtement, peinture ou finition selon la revendication 1, dans lequel l'agent organique fixant l'oxygène est choisi parmi l'hydroxylamine, la monométhylhydroxylamine, la diméthylhydroxylamine, la méthyléthylhydroxylamine, la monoéthylhydroxylamine, la diéthylhydroxylamine, la dibutylhydroxylamine, la dibenzylhydroxylamine, la monoisopropylhydroxylamine, et leurs mélanges.

3. Matériau de revêtement, peinture ou finition selon la revendication 1, dans lequel l'alkylamine est choisie parmi : la monoéthylamine, la diéthylamine, la triéthylamine, la monoisopropylamine, la diisopropylamine, la monobutylamine, la dibutylamine, la tributylamine, la monoamylamine, la diméthyléthylamine, la diméthylisopropylamine, l'éthyldiisopropylamine, la s-butylamine, la tétraméthylpropylènediamine, la diéthylaminopropylamine, la 3-méthoxypropylamine, la diméthylaminopropylaminopropylamine et la 3-isopropoxypropylamine, et leurs mélanges.

4. Matériau de revêtement, peinture ou finition selon la revendication 1, dans lequel l'alkylalcanolamine est choisie parmi : le méthylaminoéthanol, le diméthylaminoéthanol, la méthyldiéthanolamine, l'éthylaminoéthanol, le diéthylaminoéthanol, le diméthylamino-2-propanol, l'isopropylaminoéthanol, le diisopropylaminoéthanol, le butylaminoéthanol, le dibutylaminoéthanol, la butyldiéthanolamine, le t-butylaminoéthanol, et leurs mélanges.

5. Matériau de revêtement, peinture ou finition selon la revendication 1, qui contient ladite combinaison à raison de 0,001 à 2% en poids, par rapport au revêtement de surface total.

6. Matériau de revêtement, peinture ou finition selon la revendication 1, qui contient une résine alkyde en tant qu'agent filmogène à séchage par oxydation.

7. Procédé de production d'un matériau de revêtement, d'une peinture ou d'une finition contenant un agent filmogène à séchage par oxydation comprenant l'incorporation dans le matériau de revêtement, la peinture ou la finition, d'une combinaison anti-peau comprenant a) un agent organique fixant l'oxygène, avec b) une alkylamine de formule (II), et/ou c) une alkylalcanolamine de formule (III), dans laquelle a), b) et c) sont tels que définis dans la revendication 1.

8. Procédé selon la revendication 7, dans lequel ledit agent organique fixant l'oxygène est choisi parmi l'hydroxylamine, la monométhylhydroxylamine, la diméthylhydroxylamine, la méthyléthylhydroxylamine, la monoéthylhydroxylamine, la diéthylhydroxylamine, la dibutylhydroxylamine, la dibenzylhydroxylamine, la monoisopropylhydroxylamine, et leurs mélanges.

9. Procédé selon la revendication 7, dans lequel l'alkylamine est choisie parmi : la monoéthylamine, la diéthylamine, la triéthylamine, la monoisopropylamine, la diisopropylamine, la monobutylamine, la dibutylamine, la tributylamine, la monoamylamine, la diméthyléthylamine, la diméthylisopropylamine, l'éthyldiisopropylamine, la s-butylamine, la tétraméthylpropylènediamine, la diéthylaminopropylamine, la 3-méthoxypropylamine, la diméthylaminopropylaminopropylamine et la 3-isopropoxypropylamine, et leurs mélanges.

10. Procédé selon la revendication 7, dans lequel l'alkylalcanolamine est choisie parmi : le méthylaminoéthanol, le diméthylaminoéthanol, la méthyldiéthanolamine, l'éthylaminoéthanol, le diéthylaminoéthanol, le diméthylamino-2-propanol, l'isopropylaminoéthanol, le diisopropylaminoéthanol, le butylaminoéthanol, le dibutylaminoéthanol, la butyldiéthanolamine, le t-butylaminoéthanol, et leurs mélanges.

11. Procédé selon la revendication 7, dans lequel ledit matériau de revêtement, ladite peinture ou ladite finition contenant un agent filmogène à séchage par oxydation contient ladite combinaison en quantité totale de 0,001 à 2% en poids, par rapport au revêtement de surface total.

12. Procédé selon la revendication 7, dans lequel ledit matériau de revêtement, ladite peinture ou ladite finition contenant un agent filmogène à séchage par oxydation contient une résine alkyde en tant qu'agent filmogène à séchage par oxydation.

13. Article revêtu d'un matériau de revêtement, d'une peinture ou d'une finition contenant un agent filmogène à séchage par oxydation, dans lequel toute la combinaison anti-peau comprenant a) un agent organique fixant l'oxygène, avec b) une alkylamine de formule (II) et/ou c) une alkylalcanolamine de formule (III), où a), b) et c) sont tels que définis dans la revendication 1, est incorporée dans le matériau de revêtement, la peinture ou la finition.

14. Article selon la revendication 13, dans lequel ladite hydroxylamine est choisie parmi l'hydroxylamine, la monométhylhydroxylamine, la diméthylhydroxylamine, la méthyléthylhydroxylamine, la monoéthylhydroxylamine, la diéthylhydroxylamine, la dibutylhydroxylamine, la dibenzylhydroxylamine, la monoisopropylhydroxylamine, et leurs mélanges.

15. Article selon la revendication 13, dans lequel l'alkylamine est choisie parmi : la monoéthylamine, la diéthylamine, la triéthylamine, la monoisopropylamine, la diisopropylamine, la monobutylamine, la dibutylamine, la tributylamine, la monoamylamine, la diméthyléthylamine, la diméthylisopropylamine, l'éthyldiisopropylamine, la s-butylamine, la tétraméthylpropylènediamine, la diéthylaminopropylamine, la 3-méthoxypropylamine, la diméthylaminopropylaminopropylamine et la 3-isopropoxypropylamine, et leurs mélanges.

16. Article selon la revendication 13, dans lequel l'alkylalcanolamine est choisie parmi : le méthylaminoéthanol, le diméthylaminoéthanol, la méthyldiéthanolamine, l'éthylaminoéthanol, le diéthylaminoéthanol, le diméthylamino-2-propanol, l'isopropylaminoéthanol, le diisopropylaminoéthanol, le butylaminoéthanol, le dibutylaminoéthanol, la butyldiéthanolamine, le t-butylaminoéthanol, et leurs mélanges.

17. Article selon la revendication 13, dans lequel ledit matériau de revêtement, ladite peinture ou ladite finition contenant un agent filmogène à séchage par oxydation contient ladite combinaison à raison de 0,001 à 2% en poids, par rapport au revêtement de surface total.

18. Article selon la revendication 13, dans lequel ledit matériau de revêtement, ladite peinture ou ladite finition contenant un agent filmogène à séchage par oxydation contient une résine alkyde en tant qu'agent filmogène à séchage par oxydation.
